# EUROPÄISCHE PATENTSCHRIFT

(11) **EP 0 541 561 B1**
(45) Veröffentlichungstag und Bekanntmachung des Hinweises auf die Patenterteilung: **21.09.1994**
(21) Anmeldenummer: 91910794.6
(22) Anmeldetag: 17.06.1991
(51) Int. Cl.: H04B 7/08

(54) **VERFAHREN FÜR DEN MOBILEN EMPFANG VON FREQUENZMODULIERTEN STEREO-MULTIPLEXSIGNALEN**
PROCESS FOR THE MOBILE RECEPTION OF FREQUENCY-MODULATED STEREO-MULTIPLEX SIGNALS
PROCEDE POUR LA RECEPTION MOBILE DE SIGNAUX STEREO MULTIPLEX A FREQUENCE MODULEE

(30) Priorität: 30.07.1990 DE 4024178
(43) Veröffentlichungstag der Anmeldung: 19.05.1993
(73) Patentinhaber: RICHARD HIRSCHMANN GMBH & CO., 73726 Esslingen (DE)
(72) Erfinder: SCHENKYR, Dieter, D-7312 Kirchheim (DE); BUCK, Walter, D-7000 Stuttgart (DE)
(74) Vertreter: Geyer, Ulrich F., Dr. Dipl.-Phys.
(86) Internationale Anmeldenummer: EP9101122
(87) Internationale Veröffentlichungsnummer: WO9202995

(56) Entgegenhaltungen:
- EP-A- 0 141 218
- US-A- 4 574 390
- FUNKSCHAU, vol. 58, no. 26, December 1986 (München, DE), pages 42-45; H. Lindenmeier et al.: "Preiswert und reaktionsschnell"
- Patent Abstracts of Japan, vol. 10, no. 386 (E-467)(2443), 24 December 1986 & JP, A, 61177824
- IEEE Transactions on Communication Technology, vol. COM-19, no. 3, June 1971, pages 293-301; D. Ongaro: "Multipath intermodulation associated with operation of FM-FDM radio relays in heavily built areas"

## Beschreibung

Die Erfindung betrifft ein Verfahren für den mobilen Empfang von frequenzmodulierten Stereo-Multiplexsignalen mit einem Diversity-Empfangsverfahren zur Beseitigung von Störungen, die bei Umweglängen auftreten, bei denen höchstens ein Empfangseinbruch innerhalb der Bandbreite eines Übertragungskanals auftritt.

Empfangsverfahren dieser Art sind allgemein bekannt und beistielsweise in einem Aufsatz von R. Heidester & K. Vogt in NTZ 1958, Heft 6, Seiten 315-319 sowie in der EP-A-0201977, der DE-A-33 34 735, der Zeitschrift "Funkschau", 1986, Seiten 42-45 und aus "Rundfunktechnische Mitteilungen", Jahrgang 31 (1987), Heft 5, Seiten 221-227, beschreiben. Diese Diversity-Empfangsverfahren sind für mobilen Empfang, beispielsweise für den Kraftfahrzeugempfang von frequenzmodulierten Stereo-Multiplexsignalen dann sehr gut geeignet, wenn die Auswirkung von Reflexionen zu unterdrücken sind, die auf kurze Umwege zurückzuführen sind. Oder anders ausgedrückt, die herkömmlichen Diversity-Empfangsverfahren sind immer dann geeignet, wenn die Dispersion, d. h. die frequenzabhängigkeit, klein ist, was nur bei relativ kurzen Umwegen der Fall ist. Herkömmliche Empfangsverfahren mit Diversity-Empfangssystemen können jedoch mit vertretbarem Aufwand Auswirkungen von Reflexionen nicht vermeiden, die auf große Umwege zurückzuführen sind. Dies ist deshalb der Fall, weil auf Grund der Abmessungen eines Kraftfahrzeugs nur eine beschränkte Antennenbasis möglich ist, die nur ein geringes Auflösungsvermögen zuläßt. Ein weiterer Grund liegt in der beschränkten Antennenzahl, aber auch in der begrenzten Reaktionszeit der, Signalverarbeitungsverfahren.

Der Erfindung liegt daher die Aufgabe zugrunde, ein Empfangsverfahren der eingangs genannten Art so weiterzubilden, daß die die Empfangsqualitäten verschlechternden Auswirkungen von Reflexionen der Signale auch bei großem Umweg vermieden oder zumindest klein gehalten werden können, um die Empfangsqualität weiter zu verbesseren.

Die gestellte Aufgabe wird erfindungsgemäß dadurch gelöst, daß Störungen, die bei Umweglängen auftreten, bei denen wengistens zwei Empfangseinbrüche auftreten, in einer nachfolgenden Signalverarbeitungsschaltung beseitigt werden, und daß die Signalwerte während einer Störaustastung durch Interpolation gebildet werden.

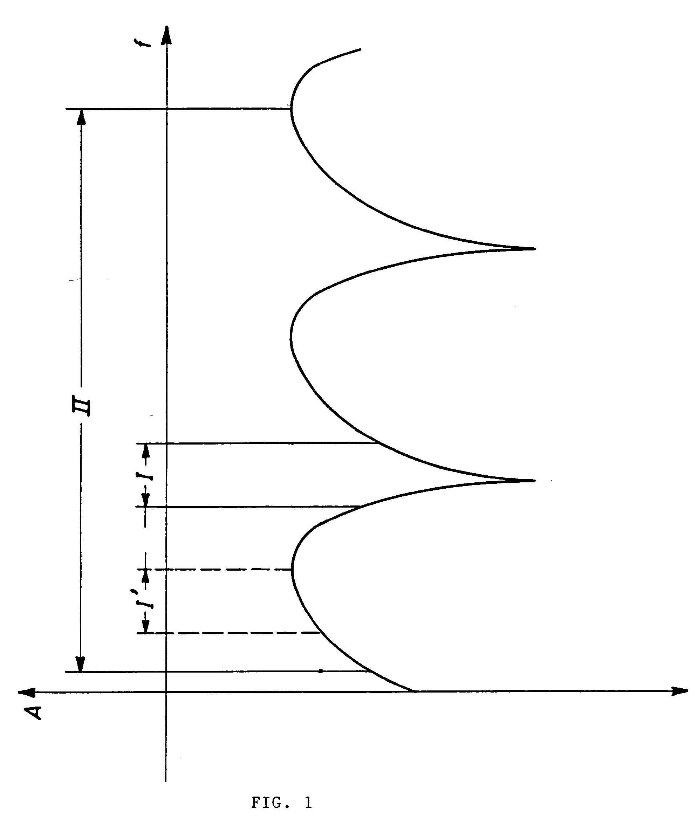

Ein Übertragungskanal, der durch Einsatz eines relativ langsam arbeitenden Diversity-Verfahrens nur die Auswirkungen von Mehrwegeempgfang mit langen Umwegen zeigt, prägt dem ankommenden Signal eine andere Störungstruktur auf als ein solcher mit beliebigen, d. h. mit kurzen und langen Umwegen. Die Bandbreite der Empfangseinbrüche ist abhängig von der Umweglänge und wird damit auf einen maximalen Wert begrenzt. Dies ist anschaulich aus der einzigen Figur ersichtlich, in der der Pegel- bzw. Amplitudenverlauf mit Pegeleinbrüchen auf Grund von Überlagerungen von Wellen mit Laufzeitunterschieden über der Frequenz aufgetragen ist.

In dieser Figur ist die Bandbreite von Empfangseinbrücen bei Überlagerungen von Wellen mit kleinen Umwegen mit I und bei Überlagerungen von Wellen mit langen Umwegen mit II bezeichnet.

Auswirkungen von Reflexionen mit kleinen Umwegen, die der relativ schmalen Bandbreite I entsprechen, sind durch die üblichen Diversity-Empfangsverfahren beherrschbar, etwa dadurch, daß bei Verwendung eines In-Phase-Diversity-Verfahrens herkömmlicher Art der Empfangsbereich aus dem Einbruchsbereich I in einen Bereich (vgl. den Bereich I′) verschoben wird, in eine Pegeleinbruch nicht auftritt.

Im Gegensatz zu den Auswirkungen von Reflexionen mit kleinen Umwegen, bei denen schmale Bandbreiten I der Empfangseinbrüche auftreten, sind die Bandbreiten II der Empfangseinbrüche bei Reflexionen mit großen Umwegen breit. Dadurch treten in diesem Falle in dem Bereich II sowohl gestörte als auch ungestörte Teilbereiche auf. Das heißt, im Übertragungskanal existieren im Gegensatz zu dem Übertragungskanal von Reflexionen mit kleinen Umwegen auch immer ungestörte Bereiche, so daß bei Reflexionen mit großen Umwegen im frequenzmodulierten Signal gestörte und ungestörte Abschnitte im zeitlichen Verlauf abwechseln. Dies bedeutet aber, daß bei Reflexionen mit großen Umwegen eine Störunterdrückung nicht durch eine Bereichsverschiebung wie bei Reflexionen mit kleinen Umwegen erreicht werden kann, weil innerhalb des Übertragungskanals immer gestörte Bereiche vorliegen.

Auf Grund der vorliegenden Feststellungen ist daher ein Diversity-Empfangsverfahren zur Beseitigung von Störungen vorgesehen, die bei Umweglängen auftreten, bei denen höchstens ein Empfangseinbruch auftritt und zusätzlich werden in einer nachfolgenden Signalverarbeitungsschaltung Störungen beseitigt, die bei Umweglängen auftreten, bei denen wenigstens zwei Empfangseinbrüche vorhanden sind. Auf diese Weise ist es zusätzlich zur Vermeidung von Auswirkungen von Reflexionen mit kleinen Umwegen nunmehr auch möglich, die Empfabgsqualität durch Vermeidung oder zumindest wesentliche Verminderung der Auswirkungen von Reflexionen mit großem Umweg zu verbessern.

In diesem Zusammenhang wird als "kleiner Umweg" ein Umweg verstanden, bei dem höchstens ein Empfangseinbruch innerhalb der Bandbreite eines Übertragungskanals auftritt. Ein "großer Umweg" ist dadurch definiert, daß dabei wenigstens zwei Empfangseinbrüche auftreten.

Die Störaustastdauer ist vorzugsweise kleiner als 12 »sec. Aufgrund der Aussteuerung mit 19 kHz Pilotsignal und 38 kHz Differenzkanal ist die Aufenthaltsdauer im gestörten Bereich begrenzt, wie im weiteren noch erläutert werden wird.

Besonders vorteilhaft ist es in diesem Zusammenhang, wenn die Signalwerte während einer Störaustastung durch Interpolation aus zeitlich vorausgegangenen und nachfolgenden Signalwerten gebildet wird. Die beim UKW-Rundfunkempfang verwencete Frequenzmodulation bewirkt, daß wegen der Differentiation im Demodulator des Empfängers das Empfangssignal abschnittsweise beim Verweilen der Momentanfrequenz in den ungestörten Bereichen auch ungestört ist. Diese Tatsache wird ausgenützt, indem gemäß der besagten vorteilhaften Ausführungsform der Erfindung beim Auftreten einer Störung der Empfang unterbrochen und der momentane Signalwert bzw. die momentanen Signalwerte durch einen aus vergangenen und zukünftigen Signalwerten interpolierten Wert ersetzt wird bzw. werden. Das Heranziehen auch zukünftiger Signalwerte ist möglich, da bei der Rundfunkübertragung die resultierende zeitliche Verzögerung erlaubt ist.

Vorzugsweise ist es jedoch auch möglich, die Interpolation aus zeitich vorangegangenen Signalwerten zu bilden. Insbesondere in diesem Zusammenhang wird die Interpolation durch eine Sample- und Hold-Schaltung gebildet. Dadurch können die entsprechenden Abtastwerte gespeichert und für eine Auswertung herangezogen werden.

Grundsätzlich sind zur Störerkennung alle Signalparameter und Kombinationen von Signalparametern nutzbar, die eine Störerkennung ermöglichen. Oder anders ausgedrückt, es sind alle Signalparameter und Kombinationen daraus nutzbar, die eine Abgrenzung eines Signalraumes von einem Störraum erlauben.

Die Verweildauer der Momentanfrequenz in einem gestörten Bereich des Übertragungskanals ist an sich nicht bekannt und wegen der kleinen unteren Grenzfrequenz der Nachrichtensignale von 40 Hz möglicherweise sehr groß. Eine Interpolation kann jedoch nur für eine sehr kurze Zeitspanne vorgenommen werden, d. h. dann, wenn die bekannten Interpolationsausgangswerte bzw. deren Abtastzeitpunkte nicht zu weit zeitlich auseinanderliegen. Der Nachteil der unbekannten Verweildauer der Momentanfrequenz in einem gestörten Bereich des Übertragungskanals wird jedoch dadurch vermieden, daß das Stereo-Multiplexsignal unabhängig vom übertragenen Nachrichtensignal einen in der Amplitude konstanten Pilotton von 19 kHz aufweist. Dies bedeutet, daß die Verweildauer der Momentanfrequenz in einem bestimmten schmalen Frequenzband begrenzt ist und der besagte Nachteil dadurch nicht in Erscheinung tritt.

Wird also ein Diversity-Empfangsverfahren eingesetzt, das eine maximale Breite der gestörten Abschnitte des Übertragungskanals bewirkt, wie dies bereits zuvor erläutert wurde, ist wegen der auch begrenzten Verweildauer der Momentanfrequenz im gestörten Bereich auf Grund des Pilottons die Zeit des Störeinbruches begrenzt.

Durch diese Tatsache ist es möglich, effiziente Störausblend- und interpolationsverfahren einzusetzen und optimal zu dimensionieren.

Wie bereits ausgeführt, ist die Signalsverarbeitungsschaltung gemäß einer Ausgestaltung der Erfindung, die sich durch besondere Einfachheit auszeichnet, eine Störaustastschaltung. Diese an sich bekannte Störaustastschaltung reduziert die Austastzeit jedoch auf einen der minimalen Umweglänge angepaßten Wert und es kann eine hohe Wiederholfrequenz des Austastvorgangs zugelassen werden. Die Austastung kann also präziser und kürzer als ohne Diversity-Verfahren gewählt und auch öfter durchgeführt werden.

Gemäß einer besonders vorteilhaften Ausführungsform der Erfindung wird als Störkriterium der Amplitudenunterschied des Störsignals zum Amplitudenmittelwert herangezogen. Schnelle Amplitudeneinbrüche sind nämlich mit dem Auftreten von Störungen des frequenzmodulierten Signals korreliert. Die Amplitudenmodulation des Empfangssignals läßt sich daher auch als Störkriterium heranziehen, da die Amplitude an sich und ohne Störeinflüsse konstant ist.

Gemäß einer besonders vorteilhaften Ausführungsform der Erfindung wird als Störkriterium das Überschreiten der zeitlichen Ableitung des Amplitudenwerts herangezogen, die in einer ein- oder mehrstufigen Differenzierschaltung gewonnen wird. Als alternative Möglichkeit ist es vorteilhaft, als Störkriterium das Überschreiten der zeitlichen Ableitung des in einem Frequenzdemodulator und einer wenigstens einstufigen Differenzierschaltung gewonnenen Nutzsignals heranzuziehen. Dadurch ist gewährleistet, daß die Störkriterien außerhalb des Signalraumes liegen bzw. Signal-und Störraum deutlich voneinander abgegrenzt ist.

Eine vorteilhafte Ausführungsform besteht auch darin, daß Linearkombinationen von bestimmten Störkriterien als Störkriterium herangezogen werden.

Im allgemeinen Fall bildet ein optimales Störunterdrückungsverfahren der vorliegenden Erfindung den im Sender erfolgten Modulationsvorgang nach und entscheidet anhand aller verfügbaren Informationen, welcher Empfangswert am wahrscheinlichsten ist. Verfügbare Informationen liegen beispielsweise durch den Pilotton von 19 kHz vor. Weiterhin kann als Information die Tatsache ausgenutzt werden, daß das Stereo-Multiplex-Signal aus Summen- und Differenzsignalen bekannter niedriger Grenzfrequenzn zusammengesetzt ist. Weiterhin ist - wie bereits ausgeführt wurde - die Amplitude der Hochfrequenz-Hüllkurve konstant; eine Modulation derselben erfolgt auf Grund der Übertragungsfunktion.

Es ist weiterhin möglich, das Empfangssignal über eine Wichtungsfunktion mit der Empfangsamplitude zu wichten und mit einer angepaßten Fensterfunktion - beispielsweise einer digitalen Fensterfunktion - den Mittelwert über einen von der höchsten Übertragungsfrequenz abhängigen Zeitabschnitt zu bilden. Auch dadurch lassen sich gute Ergebnisse erzielen. Im Grenzfall, wenn die Wichtungsfunktion eine Knickkennlinie aufweist, und die Fensterbreite zwei Punkte ist, geht dieses Verfahren in die Störaustastung über.

Gemäß einer besonders vorteilhaften Ausführungsform der Erfindung ist das Diversity-Empfangsverfahren ein Scanning-Diversity-Verfahren. Im Zusammenhang damit ist es besonders vorteilhaft, wenn als Umschaltkriterium das Überschreiten einer vorgegebenen Stördauer herangezogen wird.

Eine vorteilhafte Alternative besteht darin, wenn als Diversity-Empfangsverfahren ein Parallel-Diversity-Verfahren verwendet wird. In diesem Zusammenhang ist es von Vorteil, als Umschaltkriterium den zeitlich gemittelten Amplitudenwert heranzuziehen.

Eine weitere Alternative besteht darin, als Diversity-Empfangsverfahren ein In-Phase-Diversityverfahren zu verwenden.

Bei herkömmlichen Empfangsverfahren für mobilen Empfang, etwa in Kraftfahrzeugen, wird üblicherweise die vorhandene 150 kHz-Bandbreite eingeengt, damit Störungen durch Nachbarkanäle nicht auftreten. Der Höreindruck wird also dadurch verbessert, daß Störungen außerhalb des Sprachfrequenzbands abgeschnitten werden. Zwar können dadurch Störungen unterdrückt werden, die verbleibenden Störungen oder Störungsreste werden aber verschliffen oder unterscheiden sich kaum mehr vom eigentlichen Nutz- bzw. Nachrichtensignai. Dies bedeutet, daß das Erkennen von Störungen durch das herkömmliche Einengen der 150 kHz-Bandbreite im Kraftfahrzeugempfänger erschwert wird. Im Zusammenahng mit der vorliegenden Erfindung ist es daher vorteilhaft, die Empfängerbandbreite nicht einzuengen, da dadurch der Entscheidungsvorgang optimal durchgeführt werden kann. Die Störungen sind dadurch klarer und besser erkennbar und daher lassen sich diese unter der Randbedingung einer begrenzten Stördauer nahezu restlos beseitigen.

## Patentansprüche

1. Verfahren für den mobilen Empfang von frequenzmodulierten Stereo-Multiplexsignalen mit einem Diversity-Empfangsverfahren zur Beseitigung von Störungen, die bei Umweglängen auftreten, bei denen höchstens ein Empfangseinbruch innerhalb der Bandbreite eines Übertragungskanals auftritt, dadurch gekennzeichnet, daß Störungen, die bei Umweglängen auftreten, bei denen wenigstens zwei Empfangseinbrüche auftreten, in einer nachfolgenden Signalverarbeitungsschaltung mit Störaustastung beseitigt werden, und daß die Signalwerte während einer Störaustastung durch Interpolation gebildet werden.

2. Empfangsverfahren nach Anspruch 1, dadurch gekennzeichnet, daß die Störaustastdauer kleiner als 12 »sec ist.

3. Empfangsverfahren nach einem der vorhergehenden Ansprüche, dadurch gekennzeichnet, daß die Interpolation aus zeitlich vorangegangenen und nachfolgenden Signalwerten durchgeführt wird.

4. Empfangsverfahren nach Anspruch 3, dadurch gekennzeichnet, daß die Interpolation aus zeitlich vorangegangenen Signalwerten durchgeführt wird.

5. Empfangsverfahren nach Anspruch 4, dadurch gekennzeichnet, daß die Interpolation durch eine Sample- und Hold-Schaltung erfolgt.

6. Empfangsverfahren nach einem der vorhergehenden Ansprüche, dadurch gekennzeichnet, daß als Störkriterium der Amplituden-Unterschied des Störsignals zu einem vorgegebenen Amplitudenwert herangezogen wird.

7. Empfangsverfahren nach einem der vorhergehenden Ansprüche, dadurch gekennzeichnet, daß als Störkriterium das Überschreiten der zeitlichen Ableitung des Amplitudenwerts herangezogen wird, die in einer ein- oder mehrstufigen Differenzierschaltung gewonnen wird.

8. Empfangsverfahren nach einem der vorhergehenden Ansprüche, dadurch gekennzeichnet, daß als Störkriterium das Überschreiten, der zeitlichen Ableitung des in einem Frequenzdemodulator und einer wenigstens einstufigen Differnzierschaltung gewonnenen Nutzsignals herangezogen wird.

9. Empfangsverfahren nach einem der Ansprüche 6 bis 8, dadurch gekennzeichnet, daß Linearkombinationen aus spezifischer Störkriterium als Störkriterium herangezogen werden.

10. Empfangsverfahren nach einem der vorhergehenden Ansprüche, dadurch gekennzeichnet, daß das Diversity-Empfangsverfahren ein Scanning-Diversity-Verfahren ist.

11. Empfangsverfahren nach Anspruch 10, dadurch gekennzeichnet, daß als Umschaltkriterium das Überschreiten einer vorgegebenen Stördauer herangezogen wird.

12. Empfangsverfahren nach einem der Ansprüche 1 bis 9, dadurch gekennzeichnet, daß das Diversity-Empfangsverfahren ein Parallel-Diversity-Verfahren ist.

13. Empfangsverfahren nach Anspruch 12, dadurch gekennzeichnet, daß als Umschaltkriterium der zeitlich gemittelte Amplitudenwert herangezogen wird.

14. Empfangsverfahren nach einem der Ansprüche 1 bis 9, dadurch gekennzeichnet, daß das Diversity-Verfahren ein In-Phase-Verfahren ist.

## Claims

1. A process for mobile reception of frequency modulated stereo multiplex signals having a diversity receiving process for eliminating interference which occurs in long indirect routings, in which there is at the maximum one interruption in reception within the bandwidth of a transmission channel, characterised in that interference, which occurs in long indirect routings in which there are at least two interruptions in reception, is removed in a successive signal processing circuit having noise inversion and that the signal values are formed by interpolation during noise inversion.

2. A process for reception as claimed in claim 1 characterised in that the duration of the noise inversion is smaller than 12 »sec.

3. A process for reception as claimed in any of the preceding claims characterised in that previous and subsequent signal values are interpolated.

4. A process for reception as claimed in claim 3 characterised in that previous signal values are interpolated.

5. A process for reception as claimed in claim 4 characterised in that the interpolation is carried out by a sample and hold circuit.

6. A process for reception as claimed in any one of the preceding claims characterised in that the amplitude difference between the interference signal and a predetermined amplitude value is used as the intarference criterium.

7. A process for reception as claimed in any one of the preceding claims, characterised in that the interference criterium is the fact that the time derivative, obtained in a single or multi-step differentiating circuit, of the amplitude value is exceeded.

8. A process for reception as claimed in any one of the preceding claims, characterised in that the interference criterium is the fact that the time derivative of the useful signal obtained in a frequency demodulator and in at least a single differentiating circuit is exceeded.

9. A process for reception as claimed in any one of claims 6 to 8, characterised in that the linear combinations of specific interference criteria are used as the interference criterium.

10. A process for reception as claimed in any one of the preceding claims, characterised in that the diversity receiving process is a scanning diversity process.

11. A process for reception as claimed in claim 10, characterised in that the interference criterium is the fact that a predetermined duration of interference is exceeded.

12. A process for reception as claimed in any one of claims 1 to 9, characterised in that the diversity receiving process is a parallel diversity process.

13. A process for reception as claimed in claim 12, characterised in that the switching criterium is the amplitude value averaged with respect to time.

14. A process for reception as claimed in any one of claims 1 to 9, characterised in that the diversity process is an in-phase process.

## Revendications

1. Procédé pour la réception mobile de signaux stéréo multiplex modulés en fréquence avec un procédé de réception Diversity destiné à éliminer les perturbations qui se manifestent avec des longueurs de parcours indirects pour lesquelles il se produit au maximum une panne de réception à l'intérieur de la largeur de bande d'un canal de transmission, caractérisé en ce que les perturbations qui se produisent pour les longueurs de parcours indirects pour lesquelles deux pannes de réception au moins surviennent, sont éliminées dans un circuit de traitement de signaux suivant avec suppression des perturbations, et en ce que les valeurs des signaux pendant une suppression de perturbations sont formées par interpolation.

2. Procédé de réception selon la revendication 1, caractérisé en ce que la durée de suppression des perturbations est inférieure à 12 »s.

3. Procédé de réception selon l'une des revendications précédentes, caractérisé en ce que l'interpolation est effectuée à partir de valeurs de signaux antérieures et postérieures dans le temps.

4. Procédé de réception selon la revendication 3, caractérisé en ce que l'interpolation est effectuée à partir de valeurs de signaux antérieures dans le temps.

5. Procédé de réception selon la revendication 4, caractérisé en ce que l'interpolation s'effectue par un circuit Sample et Hold.

6. Procédé de réception selon l'une des revendications précédentes, caractérisé en ce que comme critère de perturbation on utilise la différence d'amplitude du signal de perturbation par rapport à une valeur d'amplitude donnée.

7. Procédé de réception selon l'une des revendications précédentes, caractérisé en ce que comme critère de perturbation on utilise le dépassement de la dérivée dans le temps de la valeur de l'amplitude, qui est obtenue dans un circuit de différenciation à un ou plusieurs étages.

8. Procédé de réception selon l'une des revendications précédentes, caractérisé en ce que comme critère de perturbation on utilise le dépassement de la dérivée dans le temps du signal utile obtenu dans un démodulateur de fréquence et dans un circuit de différenciation au moins à un étage.

9. Procédé de réception selon l'une des revendications 6 à 8, caractérisé en ce qu'on utilise comme critère de perturbation des combinaisons linéaires de critères de perturbations spécifiques.

10. Procédé de réception selon l'une des revendications précédentes, caractérisé en ce que le procédé de réception Diversity est un procédé Scanning-Diversity.

11. Procédé de réception selon la revendication 10, caractérisé en ce qu'on utilise comme critère de commutation le dépassement d'une durée de perturbation donnée.

12. Procédé de réception selon l'une des revendications 1 à 9, caractérisé en ce que le procédé de réception Diversity est un procédé Diversity parallèle.

13. Procédé de réception selon la revendication 12, caractérisé en ce qu'on utilise comme critère de commutation la valeur de l'amplitude moyenne dans le temps.

14. Procédé de réception selon l'une des revendications 1 à 9, caractérisé en ce que le procédé Diversity est un procédé en phase.
